# EUROPEAN PATENT SPECIFICATION

(11) **EP 3 895 956 B1**
(45) Date of publication and mention of the grant of the patent: **26.06.2024**
(21) Application number: 20382296.0
(22) Date of filing: 15.04.2020
(51) Int. Cl.: B61L 23/26, B61L 23/24, B61L 15/00, H04L 9/00, B61L 27/16, B61L 27/40, B61L 27/70

(54) **METHOD AND SYSTEM FOR MANAGING GUIDED VEHICLE TRAFFIC OVER A RAILWAY NETWORK**
VERFAHREN UND SYSTEM ZUR STEUERUNG DES FAHRZEUGVERKEHRS AUF EINEM EISENBAHNNETZ
PROCÉDÉ ET SYSTÈME DE GESTION DE TRAFIC DE VÉHICULE GUIDÉ SUR UN RÉSEAU FERROVIAIRE

(43) Date of publication of application: 20.10.2021
(73) Proprietor: Siemens Rail Automation S.A.U., 28760 Tres Cantos (Madrid) (ES)
(72) Inventor: BENITEZ LEO, Julián, 28043 Madrid (ES); HERNÁNDEZ MARTIN, Laura, 28015 Madrid (ES); CELESTINO SALMERON, David, 28240 Hoyo de Manzanares (ES); ALVAREZ PAREDES, Oscar, 28012 Madrid (ES)
(74) Representative: Siemens Patent Attorneys

(56) References cited:
- WO-A1-2019/179576
- CN-A- 110 667 653
- MICHAEL KUPERBERG ET AL: "Are Smart Contracts and Blockchains Suitable for Decentralized Railway Control?", ARXIV.ORG, CORNELL UNIVERSITY LIBRARY, 201 OLIN LIBRARY CORNELL UNIVERSITY ITHACA, NY 14853, 18 January 2019 (2019-01-18), XP081005537,

## Description

The present invention concerns a system and a method for managing guided vehicle traffic over a railway network.

The present invention is essentially related to the field of guided vehicle, wherein the expression "guided vehicle" refers to public transport means such as subways, trains or train subunits, etc., as well as load transporting means such as, for example, freight trains, for which safety is a very important factor and which are guided along a route or railway by at least one rail, in particular by two rails. More specifically, the present invention concerns safety aspects with respect to a railway network comprising such guided vehicles and focuses on the traffic of guided vehicle over the railway network.

Usually, the management of the traffic of guided vehicles over a railway network involves central systems such as an interlocking system or a radio block center (RBC) which are in charge of managing railway network devices, such as point, signals, and other trackside devices so as to ensure a safe and punctual displacement of the guided vehicles over the railway network. A failure of such central systems may strongly affect a part of a railway network or even the whole network, preventing for instance guided vehicles to run over some segments of the railway network. In order to prevent such issues, redundancy in the managing system might be used and/or a splitting of the management between different systems, wherein each system is responsible for only a part of the railway network. Such solutions increase the cost and vehicle traffic over the railway network, and are not yet completely efficient or optimized in case of failures.

Other solutions have been proposed, for instance a blockchain-based prototype implementation for railway control, based on decentralization and ensuring that the overall system state remains conflict-free and safe (Michael Kuperberg et al., "Are Smart Contracts and Blockchains Suitable for Decentralized Railway Control?", ARXIV.ORG, CORNELL UNIVERSITY LIBRARY, NY 14853, 18 January 2019, XP081005537), or a method for planning or controlling the movements of a plurality of vehicles over a network of routes implementing a concept of a distributed ledger wherein vehicle enters in transaction agreement with route elements (WO 2019/179576 A1), or document CN 110 667 653 A describing a CBTC blockchain system. However, the described solutions are complex, and improvement is required.

An objective of the present invention is to propose a method and system for improving the management of guided vehicle traffic over a railway network which are flexible and able to efficiently managed failures of railway network devices while ensuring a high degree of safety for all guided vehicles.

For achieving said objective, the present invention proposes notably a system and method for managing traffic of guided vehicles over a railway network according to independent claims 6 and 1 respectively. Other advantages of the invention are presented in the dependent claims.

The present invention concerns notably a traffic management system, hereafter TMS, for managing traffic of guided vehicles moving over a railway network, said TMS comprising:
- a requesting system configured for determining or defining a route for a guided vehicle. The TMS may comprise a plurality of requesting systems. The requesting system according to the invention might be an on-board system configured for being installed on-board a guided vehicle or a control system installed in a control center remotely located with respect to tracks of the railway network. For instance, one or more guided vehicles and/or one or more control centers might be equipped with the requesting system according to the invention. Each requesting system may comprise a database comprising a map of the railway network and a list of all trackside devices of said railway network, wherein for each trackside device, its location within said railway network is preferably defined and recorded in the database. Each requesting system is configured for determining said route for a guided vehicle. The requesting system configured for being installed on-board a guided vehicle is preferentially configured for determining a route for the guided vehicle on-board of which it is installed. The control system of the control center can preferably determine a route for each guided vehicle of a set of guided vehicles it is configured to manage. The route according to the present invention is defined as a succession of consecutive track sections;
- a set of trackside devices configured for controlling or modifying a flow of guided vehicles over a track section of the railway network. The trackside devices are typically installed along tracks of the railway network, but can also be virtual machine or device. In particular, each trackside device comprises or is characterized by different states and/or outputs that are notably configured for modifying or managing the traffic of guided vehicles over a track section of the railway network (i.e. said states and/or outputs of the trackside device are configured for modifying or controlling the flow of guided vehicles passing over said track section, for instance by authorizing or not a guided vehicle to enter or move on said track section). Indeed, a change of the state and/or output of a trackside device is preferentially configured for modifying the flow of guided vehicles over the track section said trackside device is responsible for, said states and/or outputs impacting therefore the movement of guided vehicles over said track section of the railway network. Each trackside device is therefore preferably in charge of managing the traffic or flow of guided vehicles over the track section it is responsible for;
   the TMS being characterized in that it comprises a blockchain network of interconnected nodes, said nodes comprising requesting nodes, mining nodes and full nodes,
- wherein each requesting node is configured for generating, preferentially automatically, a transaction for locking or unlocking a track section of a route defined for a guided vehicle, wherein the requesting system, e.g. each requesting system, is a requesting node of the blockchain network. Said transaction is sent by the requesting node to the other nodes of the blockchain network, preferably to the full nodes, e.g. to all full nodes. A transaction is for instance a request for authorizing a guided vehicle (a single one) to move over a track section of the railway network (i.e. in other words, to lock the track section for the route defined for the guided vehicle), said request being sent by the requesting system to the blockchain network. In particular, in order to lock a route for a guided vehicle, the requesting system automatically generates for each track section of said route a transaction that is a request for locking said track section. The complete route is then locked for the guided vehicle if all track sections composing said route are locked. Preferentially, a transaction for a guided vehicle defines or identifies at least one track section, preferably a single track section, a direction of displacement of the guided vehicle, optionally a speed profile, a lock or unlock order with respect to the track section(s), and an identification and/or authentication of the requesting system and/or an identification of the guided vehicle concerned by the transaction. Said track section identified by the transaction is a track section that is typically going to be occupied by the guided vehicle according to the route defined for the latter;
- wherein at least a part, preferentially all, trackside devices are mining nodes. Each mining node is configured for generating a validation answer that comprises an acceptance or a refusal of a transaction involving a track section for which it is configured to control or modify the guided vehicle flow. The validation answer is preferentially sent to at least one full node, for instance by broadcasting the validation answer. The mining node might receive the transaction directly from the blockchain network, e.g. by uploading itself a transaction broadcasted within the blockchain network, wherein each mining node is able to determine whether a transaction concerns a track section for which it is responsible for. This is realized for instance by a processing unit of the mining node that determines, from the data comprised within the transaction, such as the data identifying a track section, which track section is involved in said transaction, and whether said track section is a track section for which the trackside device is configured to control or modify the guided vehicle flow. According to another embodiment, the transaction is received by full nodes which determine which mining nodes are concerned by a transaction and then forward said transaction to the concerned mining nodes as further detailed hereafter;
- wherein each full node is configured for checking whether a transaction is valid or invalid, notably by checking each transaction against consensus rules. The full node is further configured for storing the blockchain and adding blocks to the blockchain, wherein each block may comprise one or several transactions that have been validated. One or more checking devices of the railway network are the full nodes of the blockchain network. In particular, at least one full node, preferentially each full node, is configured for receiving the transaction, notably each transaction generated within the blockchain network, determining from said transaction and a database a set of mining nodes concerned by said transaction and communicating (forwarding) said transaction to each mining node of said set. Each full node is further configured for receiving validation answers from the mining nodes of each set determined for each transaction, and determining from the validation answers received from all mining nodes concerned by a transaction, and optionally from the consensus rules, whether said transaction is valid or not, and informing accordingly the requesting system. One or several of said checking devices might be trackside devices of the railway network. One or several full nodes may also work as mining nodes within the blockchain network. Said checking device of the railway network comprises notably at least a processing unit and a memory and/or database, and at least one of said checking devices is preferentially different from any railway component of the railway network, in particular different from a trackside device.

The blockchain according to the invention comprises a plurality of blocks, wherein each block registers one or several validated transactions. In particular, the transactions registered within a same block might concern different track sections of a single route or different track sections of different routes, i.e. related to different guided vehicles.

Each route according to the invention comprises one or several successive and consecutive track sections of the railway network and involves therefore one or several nodes of the blockchain network, wherein, for each track section of said route, at least one transaction involving a trackside device in charge of said track section (and thus a mining node) is recorded or written in the block. In particular, the number of transactions generated for a route for a guided vehicle preferentially equals at least (i.e. is greater or equal to) the number of track sections of said route. A trackside device (mining node) might be associated to one or several track sections.

Preferentially, a database stored within each full node enables the latter to determine, for each track section, all trackside devices that have to be notified about the transaction concerning said track section. For instance, said database may provide for each track section a list or set of all trackside devices whose action, state and/or output may impact the traffic of guided vehicle over said track section. Said list might be changed by adding or withdrawing trackside devices for a track section. Each full node is preferably configured for adding, respectively withdrawing a node to the blockchain network when a trackside device is added to or withdrawn from said list, e.g. by an operator. The operator may specify the type of node of any added node, e.g. a new requesting node, or a new full node, or a new mining node.

Each transaction for a track section is configured for locking or unlocking the track section for a guided vehicle: preferentially, each trackside device in charge of said track section receives from one or several full nodes said transaction and determines according to its current state and transactions already received (e.g. already validated transactions) whether it can lock or not said track section for the guided vehicle. For this purpose, the mining node may comprise a block history registering each block comprising a transaction involving the mining node (i.e. involving a track section whose guided vehicle flow is managed by the mining node).

According to the present invention, the validation or not of a transaction is free of any human intervention. Preferentially, each trackside device is configured for autonomously determining whether it can lock or not a track section for a guided vehicle. When locking, respectively unlocking, a track section for a guided vehicle, the trackside device autonomously determines whether it can lock, respectively unlock, its state or its output for the transaction it received, and sends then a validation answer which comprises the result of this autonomous determination. Said locking/unlocking and the sending of the validation answer is notably managed by an algorithm of the blockchain network, notably of the mining node. For instance, each trackside device comprises an algorithm that defines rules for enabling the trackside device to autonomously determine whether it can lock/unlock its state or output for a transaction. In other words, each trackside device can be locked to a specific state and/or with a specific output by a requesting system through the generation and broadcasting of said transaction. If a trackside device determines by means of said algorithm that it can be locked (or respectively unlocked) in a specific state or with a specific output required for locking (respectively unlocking) the track section according to a transaction generated by a requesting system, then it locks (or respectively unlocks) said specific state or output configured for locking (or respectively unlocking) said track section for the requesting system, and notifies the full nodes that the locking (or respectively unlocking) has been completed via said validation answer. If the locking (or respectively unlocking) was not possible, then it notifies the full nodes that the locking (or respectively unlocking) was not completed via said validation answer.

The algorithm of the trackside device receives notably as input the transaction, a current state of the trackside device, optionally an already validated transaction that can be stored in the block history, and determines from said input its validation answer. If it determines that the (un)locking can be completed, then it automatically (un)locks a specific state and/or specific output and sends its validation answer. If it determines that the (un)locking cannot be completed, then it only automatically sends a validation answer notifying the full nodes that said (un)locking cannot be completed and it does not (un)lock said specific state and/or specific output. Said specific state, resp. output, is a state, resp. output, of the trackside device that enables a locking (or unlocking) of a track section, for instance one of the track sections that the track devices manages.

At least one full node, preferentially a part (e.g. half of the full nodes) of or all full nodes collect all validation answers of the mining nodes concerned by the (un)locking of a track section and determine, via an algorithm, whether the transaction for said track section can be written or not within a block of the blockchain. The transaction is written on the block if the validation answers received from all mining nodes concerned by said transaction, i.e. all mining nodes involved in the (un)locking of a track section for a guided vehicle, report an acceptance, and thus a completion of the transaction, otherwise the transaction is not written onto the block as soon as at least one mining node reports a refusal and thus non-completion of the transaction. If the transaction is written onto the block, then at least one full node notifies the requesting system about the validation of the transaction, and therefore about the locking of the track section for the guided vehicle. For notifying the requesting node (i.e. system), the full node may broadcast the blockchain or a part of the blockchain, or notify the requesting node to update its blockchain or a part of the blockchain. If the transaction is not written onto the block, then at least one full node notifies the requesting system about a refusal of the transaction, and notifies all involved mining nodes about this refusal. Mining nodes having (un)locked a specific state and/or output for said transaction are configured for automatically launching a rollback procedure wherein the (un)locked specific state and/or output is automatically changed for a directly previous state and/or output of the trackside device, so that the trackside device has at the end of the rollback procedure the state and/or output that it had before receiving the transaction that has been refused.

The present invention proposes also a method for managing traffic of guided vehicles over a railway network, the method comprising:
- generating by a requesting node of a blockchain network a transaction for locking or unlocking a track section for a guided vehicle. Said transaction is then sent or broadcasted by the requesting node within the blockchain network. The requesting node is a requesting system of the railway network. The track section is for instance one of the successive track sections defining a route for a guided vehicle. Said route is preferably determined by the requesting system;
- receiving by at least one full node of the blockchain network said transaction, wherein said full node is a checking device of the railway network;
- checking by said full node whether the transaction is valid or invalid from validation answers sent by mining nodes concerned by said transaction, wherein the mining nodes are trackside devices of the railway network;
- writing said transaction onto a block of the blockchain if the transaction is valid; and
- notifying the requesting system about the validity or invalidity of the transaction.

In particular, checking the validity or invalidity of the transaction comprises
- automatically determining by the full node a set of mining nodes involved in the traffic management of guided vehicles for said track section, and at least said full node forwarding or sending said transaction to each of the mining nodes of said set. Preferably, full nodes according to the invention comprise a database listing all nodes of the blockchain network, and for each node its type (e.g. full node, mining node, or requesting node), and optionally its location (e.g. an identification of the guided vehicle within which a requesting node is located, or a position of a mining node with respect to the railway network or a track section), and for each mining node, the track section for which it is configured to manage the guided vehicle flow;
- each of the mining nodes of said set receiving the transaction and determining whether said track section can be locked or not for the guided vehicle. Each mining node preferentially performs said determination autonomously, independently, and automatically;
- each of the mining nodes sending or broadcasting its validation answer within the blockchain network. In particular, validation answers are sent to at least one of the full nodes of the blockchain network. Each validation answer comprises an acceptance or a refusal of the transaction;
- at least one of the full nodes collecting the validation answer(s) and determining whether the transaction can be validated or not. Preferentially, all validation answers are dispatched within the blockchain network and the full nodes use consensus rules to determine whether the transaction can be validated or not based on the received validation answers for each transaction. In particular, said consensus rules comprise an algorithm configured for refusing a transaction (making it invalid) as soon as one mining node sent a validation answer comprising a refusal for said transaction, and therefore only validating a transaction if all mining nodes concerned by the transaction sent a validation answer comprising an acceptance of the transaction.

According to the present invention, each of the full nodes registers the transaction onto a block of the blockchain in case of validation of the latter, and notifies the requesting node about the validation of the transaction. In case of a refusal of the transaction by a mining node, the full node is configured for informing the requesting system and the mining nodes concerned by said transaction that the transaction is invalid.

At the end, the requesting system is thus notified about the validation of the transaction or its invalidation. In case of validation, the track section has been locked by the TMS according to the invention and the guided vehicle for which the track section has been locked can safely move on it. Otherwise, in case of invalidation of a transaction, the track section is not locked for said guided vehicle and the latter is not authorized to move on it.

In particular, the requesting system is also configured for automatically unlocking a track section as soon as the guided vehicle has completed its movement over it. For instance, when moving over a route for which the successive track sections have been locked for a guided vehicle, another on-board system of the guided vehicle may inform the requesting system installed on-board the guided vehicle that the latter completed its motion over a track section, said information triggering a generation of a transaction for unlocking the track section by the requesting system, wherein said transaction is then broadcasted within the blockchain network, which validate or not the unlocking of said track section. The blockchain enables any node of the blockchain network to keep a trace of the previous validations of transactions, improving therefore the safety of the TMS.

Further aspects of the present invention will be better understood through the following drawings, wherein like numerals are used for like and corresponding parts:
- Figure 1: schematic representation of a TMS according to the invention.
- Figure 2: flowchart of a preferred method according to the invention.

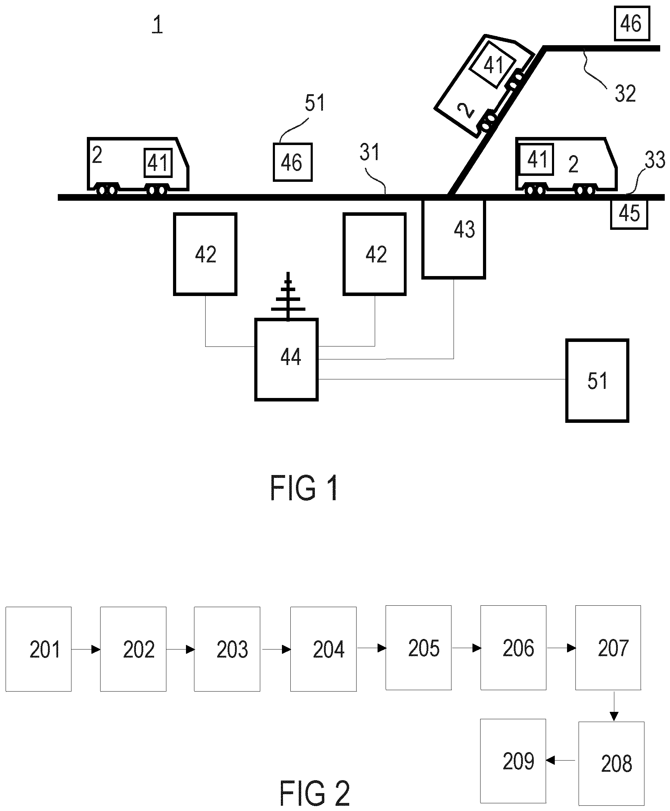

Figure 1 illustrates a preferred embodiment of a TMS 1 for managing the traffic of guided vehicles 2 over a railway network 1 according to the invention.

Figure 1 shows a railway network 1 comprising guided vehicles 2 moving over track sections 31, 32, 33 and a set of trackside devices 42, 43, 45, 46 whose outputs and/or states are configured for modifying the traffic of guided vehicles 2 over the railway network 1. According to the preset invention, said trackside devices are mining nodes of a blockchain network. Said set of trackside devices according to the invention comprises for instance all trackside devices of the railway network 1 characterized by a change of state and/or output that might modify or control or manage a flow of guided vehicles over a track section 31, 32, 33 of the railway network 1. The set of trackside devices according to the invention comprises thus devices whose state and/or output has an impact on the guided vehicle traffic over a track section or on a movement authority for this guided vehicle. Said trackside devices are for example
- signal devices 42, comprising for instance a first state authorizing a guided vehicle 2 to run over a track section and a second state preventing a guided vehicle 2 to run over the track section, requiring for instance a stop of the guided vehicle 2;
- a switch 43, characterized by a first state configured for setting a first route passing through a first track section and a second state configured for setting a second route passing through another track section;
- a level crossing 45 comprising a first state authorizing the guided vehicle 2 to pass the level crossing and a second state which does not permit the guided vehicle to pass said level crossing;
- a balise 46 configured for ensuring a safe displacement of the guided vehicle 2 over a track section, by determining for instance a motion characteristic (i.e. an output) for the guided vehicle 2, like a speed limit;
- a camera system configured for determining a presence or absence of guided vehicle on a track section and preventing movement of guided vehicles if a presence is observed and an authorization of movement if no guided vehicle is detected on the track section.

The trackside devices according to the invention can be physical track devices (like points, signal) or virtual devices of the railway network (e.g. virtual machine defining a speed restriction for a track section, etc.). Each track section 31, 32, 33 comprises at least one trackside device managing the traffic of guided vehicles 2 for said track section.

The TMS according to the invention further comprises requesting systems. The requesting systems are configured for determining routes for guided vehicles. A requesting system according to the invention might be for instance:
- an on-board device 41 of a guided vehicle 2, wherein said on-board device 41 is configured for determining a route for the guided vehicle 2 it equips, wherein said route is defined as a succession of track sections 31, 32. The on-board device 41 is typically connected to other on-board devices of the guided vehicle;
- a control system 44 of a control center configured for determining a route for one or several guided vehicles 2.

Each requesting system is a requesting node of the blockchain network according to the invention. Each requesting node comprises preferentially a processor and a database including notably a map of the railway network. From this map, the requesting node is capable of determining a route for the guided vehicle, wherein said route comprises a succession of consecutive track sections. The requesting system is further configured for generating a transaction for each track section of a route that has been determined for the guided vehicle. Each transaction is notably a request for locking or unlocking a track section of a route that has been determined by the requesting system for a guided vehicle. Each transaction comprises notably an identification of the requesting system having generated the transaction, an identification of a single track section concerned by said transaction, and a lock or unlock order. Optionally, the transaction may comprise one or several of the following parameters: an identification of the guided vehicle concerned by the transaction, a direction of displacement of the guided vehicle with respect to the track section, a schedule of the displacement enabling for instance to approximate or determine a duration of a locking.

Finally, the blockchain network comprises also full nodes. The full nodes are checking devices 51 of the railway network that are in charge of storing the blockchain network and adding blocks to said blockchain network, recording therefore the history of each transaction that took place within the blockchain network. A checking device 51, i.e. said full node, might be a trackside device of the railway network or a device of the railway network that is not a railway component, for instance a remote computing unit. The full node according to the invention preferentially comprises a memory for storing the blockchain network, a processor, and database listing for each track section a set of all trackside devices whose action, state and/or output may impact the traffic of guided vehicles over said track section. Optionally, said full node comprises also a map of the railway network. Preferably each full node comprises, notably within its database, a list of all nodes of the blockchain network, and for each node for instance its identity, location, type.

All nodes of the blockchain network are interconnected with each other in order to enable an exchange of data, notably regarding each transaction that is generated within the blockchain network. The goal of this exchange of data is a safe locking or unlocking of the track sections of a route that has been determined by a requesting device for a guided vehicle.

A preferred embodiment of the blockchain-based method for managing the traffic over the railway network will now be described based on Figure 2. The method comprises preferentially the following steps with respect to the TMS illustrated in Fig. 1:
At step 201, a requesting system generates a transaction for locking or unlocking a track section 31, 32 of the railway network 1 for a guided vehicle 2. The transaction is preferentially sent to at least one other node of the blockchain network, e.g. to a full node, or might be broadcasted within the complete blockchain network, e.g. within the full nodes of the latter. Said requesting system is for instance the on-board device 41 of the guided vehicle 2. Said on-board device 41 has for instance determined a route for the guided vehicle 2 using conventional techniques. Said route comprises of a succession of track sections 31-33. In order to lock the route or respectively unlock the route, the requesting system generates a transaction for each track section of said route, wherein each transaction is configured for locking one of the track section of the route (if the route has to be locked) or respectively for unlocking one of the track section (if the route has to be unlocked and movement over said track section has been completed). The generated transaction comprises at least an identification of the track section to be locked or unlocked, an identification and/or authentication of the requesting device and/or guided vehicle, a lock or unlock order.
At step 202, the blockchain network, i.e. at least a part of its nodes, preferentially one or several or all full nodes, receive the transaction. In particular, among the nodes of the blockchain network receiving said transaction figures at least one full node 51.
At step 203, the full node 51 having received the transaction, preferentially all full nodes 51, check whether the transaction is valid or invalid from validation answers sent by mining nodes concerned by said transaction. The full node comprises a processing unit and a database. Preferentially, this checking is carried out as follows:
   From the received transaction, the processing unit of the full node determines which track section is concerned by said transaction, and from the knowledge of said track section and from data stored in its database, it automatically determines (204) a list (or set) of all mining nodes, i.e. trackside devices, concerned by said transaction. The mining nodes concerned by the transaction are trackside devices whose state and/or output is configured for modifying or controlling a flow of guided vehicle over the track section. It can be for instance a switch 43 or a signal device 42 which has to change its state for locking or unlocking the track section for the guided vehicle 2. Then, at least one full node sends the transaction to each of the mining nodes of said set or list of mining nodes. Consensus rules might be used for determining which full node will send the transaction to the concerned mining nodes.
At step 205, each mining node of said set receives the transaction forwarded/sent by the full node. Each of said mining nodes determines then whether said track section can be locked or unlocked according to the order comprised within the transaction and generates a validation answer which comprises either an acceptance of the transaction or a refusal. In particular, each mining node comprises a processor and a memory configured for determining, from a current state and/or output of the trackside device whether it can be locked or unlocked according to the order comprised within the transaction. For instance, if a switch 43 is already locked for a route for another guided vehicle, its processor will determine that it cannot be locked for a newly received transaction for locking its state according to a specific route as long as it has not been unlocked by the requesting system of said another guided vehicle. In such a case, the switch will refuse the transaction. Preferentially, each mining node that accepts a transaction (un)locks its state and/or output according to the (un)lock order comprised within the transaction before sending the validation answer. In case of failure of the mining node, e.g. if it technically cannot be locked to a specific state required for the route defined for the guided vehicle, then it automatically generates a validation answer comprising a refusal of the transaction.
At step 206, each of said concerned mining nodes broadcasts or sends its validation answer within the blockchain network, or preferentially within the full nodes. Alternatively, the mining node sends its validation answer to at least one, preferentially all full nodes or to a specific list of full nodes. The validation answer comprises for instance an identification of the trackside device, of the track section, of the transaction, and the refusal or acceptance of the transaction.
At step 207, at least one full node collects the validation answers of all mining nodes and determines whether all mining nodes concerned by a transaction have accepted the transaction or not. If at least one mining node refused the transaction, then the full node invalidates the transaction. Indeed, to validate a transaction and register it onto a block of the blockchain, the transaction has to be accepted by all mining nodes of the set of mining nodes concerned by the transaction.
At step 208, if all mining nodes of the set accepted the transaction, then at least one of the full nodes, preferentially a part or set of the full nodes (e.g. half of the full nodes) writes (i.e. registers) the transaction onto a block of the blockchain network and notifies the requesting system about the validation of the transaction. Said full node preferentially updates the blockchain within the blockchain network or notify other nodes, e.g. all other full nodes, of the blockchain network about an update of the blockchain network. For instance, it can broadcast a new block of the blockchain within the other full nodes 51. Each new block comprises at least one validated transaction, preferentially a single validated transaction. In particular, once the transaction has been validated and written onto the block, said block is broadcasted within at least a part of the blockchain network.

If at least one of the mining nodes refused the transaction, then at least one full node invalidates the transaction and notifies the requesting system and the mining nodes of said set about the invalidation of the transaction. Upon reception of a notification of invalidation, the mining nodes of said set which already locked a state and/or output according to the order comprised within said transaction go back to a state and/or output they had before receiving said transaction.

At step 209, the requesting system received a notification comprising the validation or invalidation of its transaction. It can be notified by uploading a new block added to the blockchain, or by a message sent by a full node, or by any other way of communication. As soon as a validation has been notified for all transactions for a route, i.e. as soon as a locking of each track section of said route is confirmed by the blockchain network, then the requesting system generates a movement authorization for the guided vehicle to move over said route. Upon reception of an invalidation of a track section of said route, the requesting system may generate another transaction for another track section in order to lock another route for the guided vehicle. In such a case, if said route comprised a track section that is then not comprised within said another route and for which a transaction has already been validated by the blockchain network, then it automatically generates a transaction for unlocking said track section, so that another requesting system may lock said track section by generating a transaction for another guided vehicle.

To summarize, the present invention provides a new way of managing the traffic of a railway network wherein the vital logic which determines the change of state and/or output of trackside devices of the TMS and ensures the safety of the displacements of the guided vehicles over the railway network is moved from a central system (prior art) to the nodes of a blockchain network (i.e. said vital logic is dispatched within the nodes of the blockchain network). Advantageously, a failure of a node of the blockchain network will then only affect this single node or at most a track section, and not the other nodes which can take account of this failure for determining if newly received transactions can be authorized or not, by taking into account said failure.

## Claims

1. Traffic management system, hereafter TMS, for managing traffic of guided vehicles (2) over a railway network (1), said TMS comprising:
- one or several requesting systems (41) configured each for determining a route for one of said guided vehicles (2);
- one or several trackside devices configured for controlling or modifying a flow of said guided vehicles over a track section of the railway network;
wherein the TMS comprises a blockchain network of interconnected nodes, said nodes comprising requesting nodes, mining nodes and full nodes,
- wherein each requesting system (41) is a requesting node configured for generating within the blockchain network a transaction for locking or unlocking the track section of the route determined for the guided vehicle;
- wherein each full node is a checking device of the railway network that is configured for receiving the transaction, checking whether the transaction is valid or invalid from validation answers sent by mining nodes concerned by said transaction, writing said transaction onto a block of the blockchain if the transaction is valid, and notifying the requesting system (41) about the validity or invalidity of the transaction;
- wherein the trackside devices are mining nodes of the blockchain network, wherein each mining node is configured for generating the validation answer that comprises an acceptance or refusal of the transaction involving the track section for which it is configured to control or modify the guided vehicle flow.

2. System according to claim 1, wherein each transaction comprises an identification of the track section, a lock or unlock order, and an identification and/or authentication of the requesting system that generated the transaction and/or an identification of the guided vehicle concerned by the transaction.

3. System according to claim 1 or 2, wherein in order to lock the route for the guided vehicle, the requesting system automatically generates for each track section (31, 32, 33) of said route the transaction that is a request for locking said track section (31, 32, 33) for the guided vehicle (2).

4. System according to one of the claims 1 to 3, wherein, for checking whether the transaction is valid or not, the full node is configured for determining from the transaction and an internal database a set of mining nodes concerned by said transaction, sending said transaction to each mining node of said set, receiving in return a validation answer from each of the mining nodes of said set, and determining the validity or invalidity of the transaction from said validation answers.

5. System according to one of the claims 1 to 4, wherein one or several of said checking devices are trackside devices of the railway network.

6. Method for managing traffic of guided vehicles (2) over a railway network (1), the method comprising the steps:
- generating (201) by a requesting node of a blockchain network a transaction for locking or unlocking a track section for a guided vehicle, wherein said transaction is then sent by a requesting node of the blockchain network, wherein said requesting node is a requesting system of the railway network;
- receiving (202) by at least one full node of the blockchain network said transaction, wherein said full node is a checking device of the railway network (1);
- checking (203) by said full node whether the transaction is valid or invalid from validation answers sent by mining nodes concerned by said transaction, wherein said mining nodes are trackside devices of the railway network;
- writing (208) said transaction onto a block of the blockchain if the transaction is valid and notifying (209) the requesting system about the validity or invalidity of the transaction.

7. Method according to claim 6, wherein checking (203) the validity or invalidity of the transaction comprises:
- automatically determining (204) by the full node a set of mining nodes involved in the traffic management of guided vehicles for said track section (31, 32, 33), and sending said transaction to each of the mining nodes of said set;
- each of the mining nodes of said set receiving (205) the transaction, determining whether said track section can be locked/unlocked or not for the guided vehicle, and generating a validation answer comprising an acceptance or a refusal of the transaction;
- each mining node of said set sending (206) its validation answer within the blockchain network;
- at least one, preferentially half, of the full nodes collecting (207) the validation answer of each mining node of said set and determining whether the transaction can be validated or not, wherein the transaction is validated only if all validation answers for a transaction comprise an acceptance of the transaction.

8. Method according to claim 6 or 7, wherein said trackside device is one of the following:
- a switch (43);
- a level crossing (45);
- a balise (46);
- a signal device (42);
- a camera system;
- a virtual device configured for modifying or controlling the flow of the guided vehicles over the track section.

9. Method according to one of the claims 6 to 8, wherein the requesting system is an on-board device (41) of the guided vehicle (2) or a control system (44) of a control center.

## Patentansprüche

1. Verkehrsleitsystem, nachfolgend VLS genannt, zum Leiten des Verkehrs von spurgebundenen Fahrzeugen (2) in einem Schienennetz (1), wobei das VLS Folgendes umfasst:
- ein oder mehrere anfragende Systeme (41), die jeweils zum Bestimmen einer Route für eines der spurgebundenen Fahrzeuge (2) konfiguriert sind,
- eine oder mehrere streckenseitige Vorrichtungen, die zum Regeln oder Ändern eines Flusses der spurgebundenen Fahrzeuge auf einem Gleisabschnitt des Schienennetzes konfiguriert sind,
wobei das VLS ein Blockchain-Netzwerk miteinander verbundener Knoten umfasst, wobei die Knoten anfragende Knoten, Mining-Knoten und vollständige Knoten umfassen,
- wobei es sich bei jedem anfragenden System (41) um einen anfragenden Knoten handelt, der so konfiguriert ist, dass er in dem Blockchain-Netzwerk eine Transaktion zum Sperren oder Entsperren des Gleisabschnitts der für das spurgebundene Fahrzeug bestimmten Route erzeugt,
- wobei es sich bei jedem vollständigen Knoten um eine Prüfvorrichtung des Schienennetzes handelt, die so konfiguriert ist, dass sie die Transaktion empfängt, anhand von Validierungsantworten, die von von der Transaktion betroffenen Mining-Knoten gesendet werden, prüft, ob die Transaktion gültig ist, die Transaktion, wenn sie gültig ist, in einen Block der Blockchain schreibt und das anfragende System (41) über die Gültigkeit der Transaktion informiert,
- wobei es sich bei den streckenseitigen Vorrichtungen um Mining-Knoten des Blockchain-Netzwerks handelt, wobei jeder Mining-Knoten zum Erzeugen der Validierungsantwort konfiguriert ist, die eine Annahme oder eine Ablehnung der Transaktion umfasst, welche den Gleisabschnitt betrifft, für den er konfiguriert ist, den Fluss der spurgebundenen Fahrzeuge zu regeln oder zu ändern.

2. System nach Anspruch 1, wobei jede Transaktion eine Identifizierung des Gleisabschnitts, einen Sperr- oder Entsperrbefehl und eine Identifizierung und/oder Authentifizierung des anfragenden Systems umfasst, das die Transaktion erzeugt hat, und/oder eine Identifizierung des spurgebundenen Fahrzeugs, das von der Transaktion betroffen ist.

3. System nach Anspruch 1 oder 2, wobei das anfragende System zwecks Sperrens der Route für das spurgebundene Fahrzeug automatisch für jeden Gleisabschnitt (31, 32, 33) der Route die Transaktion erzeugt, bei der es sich um eine Anfrage handelt, den Gleisabschnitt (31, 32, 33) für das spurgebundene Fahrzeug (2) zu sperren.

4. System nach einem der Ansprüche 1 bis 3, wobei der vollständige Knoten für das Prüfen, ob die Transaktion gültig ist, so konfiguriert ist, dass er anhand der Transaktion und einer internen Datenbank einen Satz Mining-Knoten bestimmt, die von der Transaktion betroffen sind, die Transaktion zu jedem Mining-Knoten in dem Satz sendet, als Reaktion eine Validierungsantwort von jedem der Mining-Knoten in dem Satz empfängt und anhand der Validierungsantworten die Gültigkeit der Transaktion bestimmt.

5. System nach einem der Ansprüche 1 bis 4, wobei es sich bei einer oder mehreren der Prüfvorrichtungen um streckenseitige Vorrichtungen des Schienennetzes handelt.

6. Verfahren zum Leiten des Verkehrs von spurgebundenen Fahrzeugen (2) in einem Schienennetz (1), wobei das Verfahren folgende Schritte umfasst:
- Erzeugen (201) einer Transaktion zum Sperren oder Entsperren eines Gleisabschnitts für ein spurgebundenes Fahrzeug durch einen anfragenden Knoten eines Blockchain-Netzwerks, wobei die Transaktion dann von einem anfragenden Knoten des Blockchain-Netzwerks gesendet wird, wobei es sich bei dem anfragenden Knoten um ein anfragendes System des Schienennetzes handelt,
- Empfangen (202) der Transaktion durch mindestens einen vollständigen Knoten des Blockchain-Netzwerks, wobei es sich bei dem vollständigen Knoten um eine Prüfvorrichtung des Schienennetzes (1) handelt,
- Prüfen (203) anhand von Validierungsantworten, die von von der Transaktion betroffenen Mining-Knoten gesendet werden, durch den vollständigen Knoten, ob die Transaktion gültig ist, wobei es sich bei den Mining-Knoten um streckenseitige Vorrichtungen des Schienennetzes handelt,
- wenn die Transaktion gültig ist, Schreiben (208) der Transaktion in einen Block der Blockchain und Informieren (209) des anfragenden Systems über die Gültigkeit der Transaktion.

7. Verfahren nach Anspruch 6, wobei das Prüfen (203) der Gültigkeit der Transaktion Folgendes umfasst:
- automatisches Bestimmen (204) eines Satzes Mining-Knoten, die an der Verkehrsleitung für spurgebundene Fahrzeuge für den Gleisabschnitt (31, 32, 33) beteiligt sind, durch den vollständigen Knoten und Senden der Transaktion zu jedem der Mining-Knoten in dem Satz,
- wobei jeder der Mining-Knoten in dem Satz, der die Transaktion empfängt (205), bestimmt, ob der Gleisabschnitt für das spurgebundene Fahrzeug gesperrt/entsperrt werden kann, und eine Validierungsantwort erzeugt, die eine Annahme oder eine Ablehnung der Transaktion umfasst,
- wobei jeder Mining-Knoten in dem Satz seine Validierungsantwort in dem Blockchain-Netzwerk sendet (206),
- wobei mindestens einer, vorzugsweise die Hälfte der vollständigen Knoten die Validierungsantwort jedes Mining-Knotens in dem Satz sammelt (207) und bestimmt, ob die Transaktion validiert werden kann, wobei die Transaktion nur dann validiert wird, wenn alle Validierungsantworten für eine Transaktion eine Annahme der Transaktion umfassen.

8. Verfahren nach Anspruch 6 oder 7, wobei es sich bei der streckenseitigen Vorrichtung um eines der folgenden Elemente handelt:
- eine Weiche (43),
- einen Bahnübergang (45),
- eine Balise (46),
- eine Signalvorrichtung (42),
- ein Kamerasystem,
- eine virtuelle Vorrichtung, die zum Ändern oder Regeln des Flusses der spurgebundenen Fahrzeuge auf dem Gleisabschnitt konfiguriert ist.

9. Verfahren nach einem der Ansprüche 6 bis 8, wobei es sich bei dem anfragenden System um eine Bordvorrichtung (41) des spurgebundenen Fahrzeugs (2) oder ein Leitsystem (44) einer Leitstelle handelt.

## Revendications

1. Système de gestion de trafic, ci-après TMS, destiné à la gestion d'un trafic de véhicules guidés (2) sur un réseau ferroviaire (1), ledit TMS comprenant :
- un ou plusieurs systèmes demandeurs (41) chacun d'eux étant configuré de façon à déterminer un itinéraire pour un desdits véhicules guidés (2),
- un ou plusieurs dispositifs de bord de voie configurés de façon à réguler ou modifier un flux desdits véhicules guidés sur une section de voie du réseau ferroviaire, le TMS comprenant un réseau de chaîne de blocs de noeuds interconnectés, lesdits noeuds comprenant des noeuds demandeurs, des noeuds de minage et des noeuds complets,
- dans lequel chaque système demandeur (41) est un noeud demandeur configuré de façon à générer à l'intérieur du réseau de chaîne de blocs une transaction destinée au verrouillage ou au déverrouillage de la section de voie de l'itinéraire déterminé pour le véhicule guidé,
- dans lequel chaque noeud complet est un dispositif de vérification du réseau ferroviaire qui est configuré de façon à recevoir la transaction, à vérifier si la transaction est valide ou non valide à partir de réponses de validation envoyées par des noeuds de minage concernés par ladite transaction, à écrire ladite transaction sur un bloc de la chaîne de blocs si la transaction est valide et à signaler au système demandeur (41) la validité ou la non-validité de la transaction,
- dans lequel les dispositifs de bord de voie sont des noeuds de minage du réseau de chaîne de blocs, chaque noeud de minage étant configuré de façon à générer la réponse de validation qui comprend une acceptation ou un rejet de la transaction impliquant la section de voie pour laquelle il est configuré de façon à réguler ou modifier le flux de véhicules guidés.

2. Système selon la revendication 1, dans lequel chaque transaction comprend une identification de la section de voie, une instruction de verrouillage ou de déverrouillage et une identification et/ou une authentification du système demandeur qui a généré la transaction et/ou une identification du véhicule guidé concerné par la transaction.

3. Système selon la revendication 1 ou 2, dans lequel, afin de verrouiller l'itinéraire pour le véhicule guidé, le système demandeur génère automatiquement pour chaque section de voie (31, 32, 33) dudit itinéraire la transaction qui est une demande de verrouillage de ladite section de voie (31, 32, 33) pour le véhicule guidé (2).

4. Système selon l'une quelconque des revendications 1 à 3, dans lequel, pour vérifier si la transaction est valide ou non, le noeud complet est configuré de façon à déterminer à partir de la transaction et d'une base de données interne un ensemble de noeuds de minage concernés par ladite transaction, à envoyer ladite transaction à chaque noeud de minage dudit ensemble, à recevoir en retour une réponse de validation à partir de chacun des noeuds de minage dudit ensemble, et à déterminer la validité ou la non-validité de la transaction à partir desdites réponses de validation.

5. Système selon l'une quelconque des revendications 1 à 4, dans lequel un ou plusieurs desdits dispositifs de vérification sont des dispositifs de bord de voie du réseau ferroviaire.

6. Procédé de gestion d'un trafic de véhicules guidés (2) sur un réseau ferroviaire (1), le procédé comprenant les étapes suivantes :
- la génération (201) par un noeud demandeur d'un réseau de chaîne de blocs d'une transaction destinée au verrouillage ou au déverrouillage d'une section de voie pour un véhicule guidé, ladite transaction étant ensuite envoyée par un noeud demandeur du réseau de chaîne de blocs, ledit noeud demandeur étant un système demandeur du réseau ferroviaire,
- la réception (202) par au moins un noeud complet du réseau de chaîne de blocs de ladite transaction, ledit noeud complet étant un dispositif de vérification du réseau ferroviaire (1),
- la vérification (203) par ledit noeud complet si la transaction est valide ou non valide à partir des réponses de validation envoyées par des noeuds de minage concernés par ladite transaction, lesdits noeuds de minage étant des dispositifs de bord de voie du réseau ferroviaire,
- l'écriture (208) de ladite transaction vers un bloc de la chaîne de blocs si la transaction est valide et le signalement (209) au système demandeur de la validité ou de la non-validité de la transaction.

7. Procédé selon la revendication 6, dans lequel la vérification (203) de la validité ou de la non-validité de la transaction comprend :
- la détermination automatique (204) par le noeud complet d'un ensemble de noeuds de minage impliqués dans la gestion de trafic de véhicules guidés pour ladite section de voie (31, 32, 33), et l'envoi de ladite transaction à chacun des noeuds de minage dudit ensemble,
- la détermination, par chacun des noeuds de minage dudit ensemble (205) recevant la transaction, si ladite section de voie peut être verrouillée/déverrouillée ou non pour le véhicule guidé, et la génération d'une réponse de validation comprenant une acceptation ou un rejet de la transaction,
- l'envoi par chaque noeud de minage dudit ensemble (206) de sa réponse de validation à l'intérieur du réseau de chaîne de blocs,
- le recueil par au moins un, de préférence la moitié, des noeuds complets (207) de la réponse de validation de chaque noeud de minage dudit ensemble et la détermination si la transaction peut être validée ou non, la transaction étant validée uniquement si la totalité des réponses de validation pour une transaction comprennent une acceptation de la transaction.

8. Procédé selon la revendication 6 ou 7, dans lequel ledit dispositif de bord de voie est un dispositif parmi les suivants :
- un commutateur (43),
- un passage à niveau (45),
- une balise (46),
- un dispositif de signalisation (42),
- un système de caméra,
- un dispositif virtuel configuré de façon à réguler ou modifier le flux des véhicules guidés sur la section de voie.

9. Procédé selon l'une quelconque des revendications 6 à 8, dans lequel le système demandeur est un dispositif embarqué (41) du véhicule guidé (2) ou un système de commande (44) d'un centre de commande.
